# EUROPEAN PATENT SPECIFICATION

(11) **EP 0 544 011 B1**
(45) Date of publication and mention of the grant of the patent: **12.11.1997**
(21) Application number: 92911246.4
(22) Date of filing: 10.06.1992
(51) Int. Cl.: H01M 4/52, H01M 4/32

(54) **NICKEL ELECTRODE FOR ALKALI STORAGE BATTERIES**
NICKELELEKTRODE FÜR ALKALIBATTERIEN
ELECTRODE AU NICKEL POUR PILES ALCALINES

(30) Priority: 14.06.1991 JP 170587/91; 28.10.1991 JP 309960/91
(43) Date of publication of application: 02.06.1993
(73) Proprietor: YUASA CORPORATION, Takatsuki-shi, Osaka 569 (JP)
(72) Inventor: Watada, Masaharu, Takatsuki-shi, Osaka 569 (JP); Oshitani, Masahiko, Takatsuki-shi, Osaka 569 (JP); Onishi, Masuhiro, Takatsuki-shi, Oasaka 569 (JP)
(74) Representative: Linn, Samuel Jonathan
(86) International application number: PCT/JP92/00740
(87) International publication number: WO 92/22934

(56) References cited:
- EP-A- 0 337 029
- EP-A- 0 353 837
- EP-A- 0 557 522
- JP-A- 1 112 663
- JP-A- 2 030 061
- JP-A- 2 109 261
- JP-A- 3 046 758
- JP-A- 3 078 965
- JP-A-59 083 347
- JP-A-60 131 765
- JP-A-63 124 371
- PATENT ABSTRACTS OF JAPAN vol. 015 no. 250 (E-1082) ,26 June 1991 & JP-A-03 078965 (YUASA BATTERY CO LTD) 4 April 1991,
- PATENT ABSTRACTS OF JAPAN vol. 017 no. 209 (E-1355) ,23 April 1993 & JP-A-04 349353 (YUASA BATTERY CO LTD) 3 December 1992,
- EXTENDED ABSTRACTS, vol. 89, no.2, 1989 HOLLYWOOD US, pages 50-51, MASAHIKO O ET AL 'DEVELOPMENT OF A HIGH ENERGY DENSITY PASTED NICKEL ELECTRODE'
- PATENT ABSTRACTS OF JAPAN vol. 016 no. 210 (E-1203) ,19 May 1992 & JP-A-04 034843 (YUASA BATTERY CO LTD) 5 February 1992,
- PATENT ABSTRACTS OF JAPAN vol. 009 no. 291 (E-359) ,19 November 1985 & JP-A-60 131766 (NIHON DENCHI KK) 13 July 1985,
- PATENT ABSTRACTS OF JAPAN vol. 014 no. 502 (E-0997) ,2 November 1990 & JP-A-02 207452 (YUASA BATTERY CO LTD) 17 August 1990,

## Description

This invention relates to nickel electrodes for use in alkaline batteries, such as nickel-cadmium and nickel-metal hydride batteries.

### Background

Known nickel electrodes made up by directly loading nickel hydroxide powder as an active material include a paste-type electrode, in which the nickel hydroxide powder is formed into a paste and loaded in a porous substrate comprising nickel, and button-type and pocket-type electrodes in which the nickel hydroxide powder is wrapped in a current collector. The porous substrate comprising an alkali resistant metal forming the current collector is comparatively expensive in the paste-type electrode, so that studies have been made with an electrode using a core metal as a current collector.

With the recent tendency to minimize the size and weight of portable electric equipment, there is an increasing demand for enhancing energy density in batteries serving as portable power sources. In order to meet this demand, nickel-cadmium batteries, nickel-metal hydride batteries, nickel-zinc batteries and the like, using a paste-type nickel electrode, have been developed and put to practical use.

A paste-type nickel electrode is made up by forming the nickel hydroxide powder into a paste and directly loading it in a porous substrate comprising nickel. Therefore, in order to obtain a paste-type nickel electrode having a high energy density, one can increase the porosity of the electrode substrate and the density of the nickel hydroxide powder forming the active material.

Nickel-fibre and foamed nickel porous bodies having a porosity of about 95%, which is approximately the manufacture limit for porosity, have been put in practical use for the electrode substrate. A nickel hydroxide powder whose inner pore volume is controlled to not more than 0.1 ml/g has been developed for the active material. Since the nickel hydroxide powder has a bulk density as high as about 2 g/ml, it becomes possible to load about 20% more of this powder than of a conventional one. By using the high-porosity electrode substrate and the high-density nickel hydroxide powder, it becomes possible to make up a paste-type nickel electrode of 550 mAh/ml or more, so that the electrode is applicable to a battery system having high energy density.

On the other hand, the nickel hydroxide powder whose inner pore volume is controlled to not more than 0.1 ml/g is obtained in a spherical shape, caused by its manufacturing process. For this reason, clearances exist between powder particles under a loaded state and this has been a primary negative factor as regards energy density.

In the conventional paste-type nickel electrode having a high energy density, there have been serious problems of (1) swelling of the electrode due to a decrease in density of the active material caused by repeated charging and discharging, and (2) low charging efficiency at high temperatures. In order to solve the above problem (1), it is known that adding a small quantity of cadmium to the active material in a solid solution state has been effective. Further, in order to solve the above problem (2) a method of adding lithium hydroxide to potassium hydroxide solution, used as a electrolyte, has been generally used.

However, cadmium is a hazardous heavy metal and not preferable in connection with modern environmental demands, so that development of a new additive element is highly desirable to replace cadmium. In addition, in the above method for solving the problem (2), there have been problems with a lowering of discharge voltage and a decrease in discharge capacity at low temperatures.

Furthermore, from the standpoint of increasing the energy density it is desired to minimize clearances between powder particles arising when loading the nickel hydroxide powder.

An object herein is to provide a paste-type nickel electrode, specifically a nickel electrode for alkaline battery, which can prevent electrode swelling without being a primary factor in environmental pollution, and which has good charge efficiency over a wide range of temperature, especially at high temperatures.

Our EP-A-353837 describes a paste-type nickel electrode in which 3-10 wt% Zn or 1-3 wt% Mg are included in the high-density nickel hydroxide powder as solid solution, to reduce swelling without the use of highly toxic Cd. It also mentions that inclusion of a small amount of Co in solid solution improves high temperature (e.g. 45°C) charge performance, although the emphasis is on inclusion of Co as a separate CoOOH network.

The present invention provides a nickel electrode for an alkaline battery, comprising as active material a nickel hydroxide powder whose inner pore volume is not more than 0.1 ml/g and which incorporates cobalt and Group II element in solid solution state,
characterised in that barium in combination with zinc is used as said Group II element.

Other aspects and preferred options are set out in the claims. The content of Group II element is preferably at least 1 wt% when converted to zinc only, and the content of cobalt is preferably at least 2 wt%. the sum of the contents of Group II element and cobalt is preferably not more than 10 wt%.

The electrode swelling of nickel electrodes, using nickel hydroxide powder increased in density by controlling inner pore volume, is caused by low-density γ-type nickel oxyhydroxide (γ-NiOOH) formed on repeated charging and discharging. Solid solution addition of cadmium can control the formation of γ-NiOOH. Group II elements such as zinc and magnesium act in the same manner as cadmium. In addition, the Group II element included in solid solution state is active to shift an oxygen evolution potential at the end of charging to the noble side. On the other hand, when a nickel electrode using increased-density nickel hydroxide powder is charged at high temperature, oxidation reaction of the active material and oxygen evolution reaction occur simultaneously. An oxygen overvoltage, which is a difference between the oxygen evolution potential and the oxidation potential, is small and the oxygen evolution reaction becomes predominant, reducing the charging efficiency. However, when cobalt exists in the active material in solid solution state, the charging oxidation potential shifts to the base side so that the oxygen overvoltage becomes larger improving the charging efficiency at high temperature. This is effective especially when cobalt is included over 2 wt% incl. When only cobalt is included without including any Group II element, actions of controlling the formation of γ-NiOOH and shifting the oxygen evolution potential to the noble side are not recognized.

So, in this invention the formation of γ-NiOOH is controlled by the Group II elements Zn and Ba so that swelling of the electrode is avoided. The oxygen evolution potential of the active material is shifted to the noble side by these Group II elements while the charging oxidation potential of active material is shifted to the base side by the cobalt. Consequently, the oxygen overvoltage is increased more than by either Group II element or cobalt alone, creating a synergistic action, so that charging efficiency at high temperature is improved. Accordingly, a paste-type nickel electrode for an alkaline battery having a high performance and low pollution can be obtained.

### Brief Description of Drawings

Fig. 1 is a diagram showing a pore diameter distribution of nickel hydroxide powder used in Reference Examples.

Fig. 2 is a diagram showing a relation between content of zinc and formation yield of γ-NiOOH in the Reference Examples.

Fig. 3 is a diagram showing a relation between content of cobalt and oxygen overvoltage in the Reference Examples.

Fig. 4 is a diagram showing a relation between content of cobalt and charging efficiency at high temperature (45°C) in the Reference Examples.

Fig. 5 is a diagram showing capacity characteristics of the Reference Examples and a further comparison example.

Fig. 6 is a diagram showing a relation between contents of zinc and barium and formation yield of γ-NiOOH in embodiments of the invention.

### REFERENCE EXAMPLES

Nickel hydroxide powder including zinc and cobalt in solid solution state was prepared by the following method. Ammonium nitrate was added to an aqueous solution formed by adding specified amounts of zinc nitrate and cobalt nitrate to nickel nitrate. Then, the solution was violently stirred while dropping in sodium hydroxide solution to decompose complex ion, and nickel hydroxide particles including zinc and cobalt in solid solution state were gradually deposited and grown.

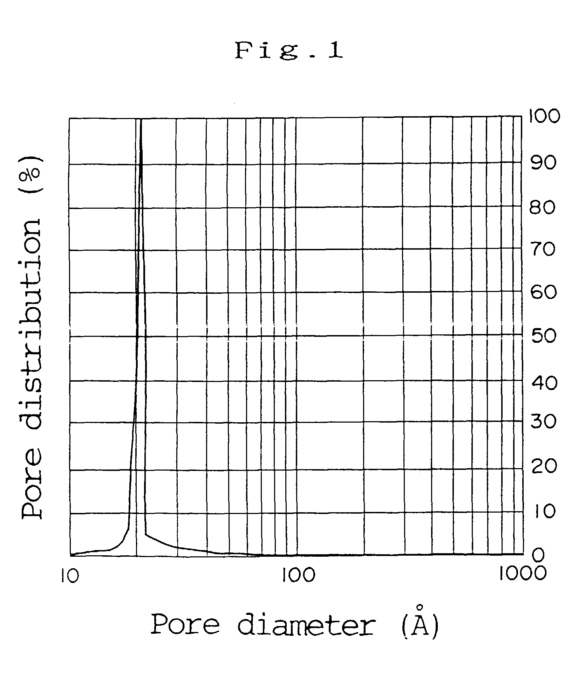

Fig. 1 is a diagram showing the pore diameter distribution of nickel hydroxide powder prepared as described above. The abscissa denotes pore diameter (Å = 10⁻¹⁰m) and the ordinate denotes a pore diameter distribution. This nickel hydroxide powder includes 5 wt% of zinc and 5 wt% of cobalt in solid solution state. An inner pore volume of the nickel hydroxide powder is 0.02 ml/g, so it has a high density; its bulk density is 2.0 g/ml. Even in cases where the contents of zinc and cobalt were different from the above values, the pore diameter distribution was similar to the above. However, this was so only when the zinc content was at least 1 wt%, cobalt content was at least 2 wt% and the sum of zinc and cobalt contents was not more than 10 wt%.

A small quantity of cobalt monoxide powder was mixed with the nickel hydroxide powder thus prepared. Aqueous solution increased in viscosity by carboxymethylcellulose was added thereto to form a paste, and a specific amount of the paste was loaded in a substrate comprising a nickel fibrous porous body to make up a paste-type nickel electrode. This electrode was charged and discharged in an electrolyte-forming potassium hydroxide solution or lithium hydroxide solution using a cadmium anode as a counter-electrode, to measure inter alia the electrode swelling factor and a charge efficiency at a high temperature.

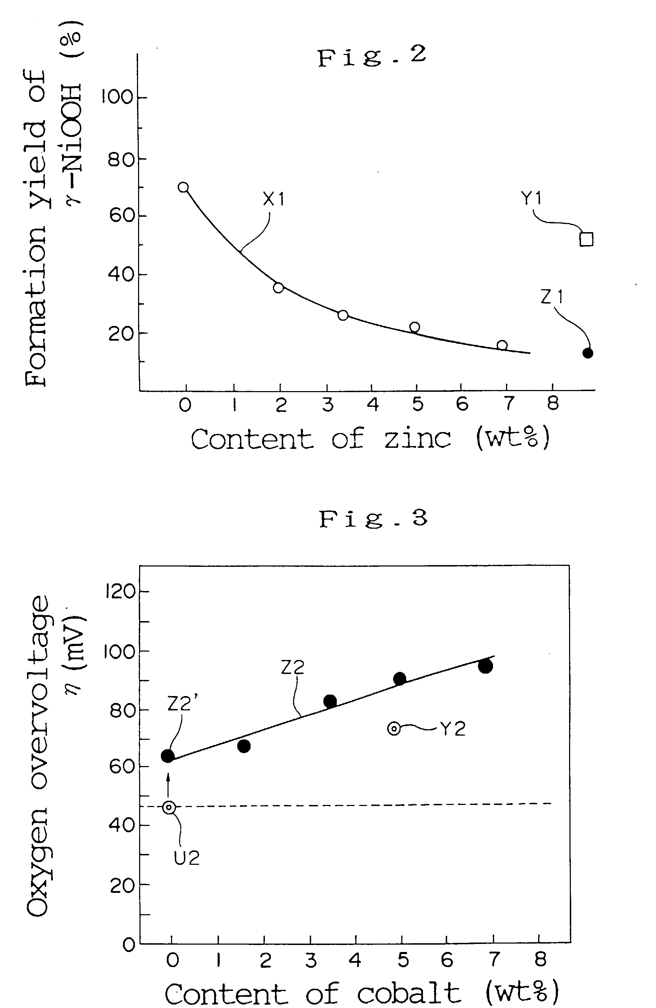

Fig. 2 is a diagram showing the relation between content of zinc (wt%) and formation yield of γ-NiOOH (%). In this figure, Y1 shows a case where only cobalt at 5 wt% is included and Z1 shows a case where both zinc at 5 wt% and cobalt at 5 wt% are included. X1 shows a case where only zinc is included. The formation yield of γ-NiOOH was obtained in such a way that the nickel electrode was charged with a high current density of 1C and then subjected to X-ray analysis. As seen from X1, the formation yield of γ-NiOOH decreases in proportion to the content of zinc. Since practically troublesome swelling of an electrode will not occur when the formation yield of γ-NiOOH is not greater than 50%, it is preferable that the content of zinc is at least 1 wt% as seen from Fig. 2. This applies in the same way when both zinc and cobalt are included, as seen from X1 and Z1. However, as shown by Y1, the decrease in formation yield of γ-NiOOH i.e. the effect of control on formation of γ-NiOOH was not observed where only cobalt was included, in quantities not more than 20 wt%.

Fig. 3 is a diagram showing the relation between content of cobalt (wt%) and oxygen overvoltage η (mV). In this figure, Z2 shows a case where both zinc and cobalt are included. The content of zinc is constant at 5 wt%. Y2 shows a case where only cobalt at 5 wt% is included and U2 shows a case where zinc and cobalt are not included, i.e. only nickel is included. In Z2, a case where a content of cobalt is zero i.e. Z2' shows a case where only zinc at 5 wt% is included. Measurement was carried out under conditions of temperature at 20°C and charge rate of 0.1C X 15 hours. As seen from relations of Z2' and Y2 and U2, the oxygen overvoltage when including only zinc or cobalt becomes larger than that when including nothing. However, as shown by Z2, the oxygen overvoltage when including zinc together with cobalt becomes still larger than that. This may be attributable to a synergistic effect of shifting oxygen evolution potential to a noble side owing to the zinc and shifting of oxidation voltage to a base side owing to the cobalt.

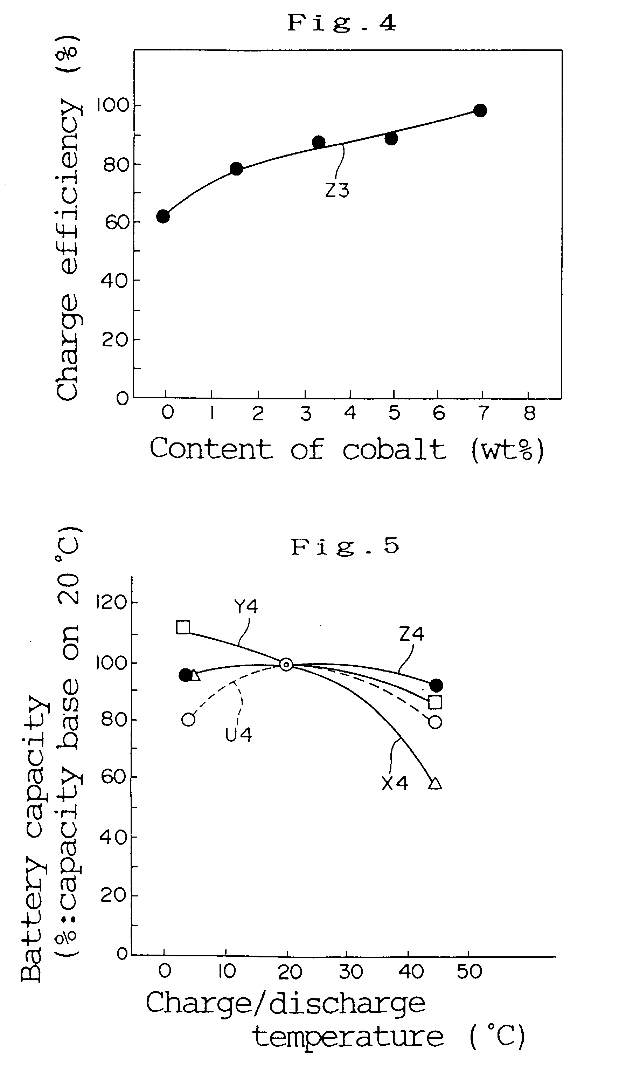

Fig. 4 is a diagram showing the relation between content of cobalt (wt%) and charge efficiency (%) at a high temperature, namely 45°C. In this figure, Z3 shows a case where zinc and cobalt are included. The content of zinc is constant at 5 wt%. Measure was carried out at 45°C, charge rate of 0.1C X 15 hours and discharge of 0.2C. As seen from this figure, the charge efficiency increases in proportion to the content of cobalt. This may be attributable to the charge efficiency being increased by an increase in the oxygen overvoltage shown by Fig. 3. As seen from Fig. 4, a practically satisfactory charge efficiency of 80% or more can be obtained when the content of cobalt is 2 wt% or more. Accordingly, it is preferable to use a content of cobalt of at least 2 wt%. However, since the discharge voltage decreases as the content of cobalt is increased, it is preferable to use a content of cobalt not more than 10 wt%.

Fig. 5 is a diagram showing the capacity characteristics of nickel electrodes as described above and a comparison example. The abscissa denotes a charge/discharge temperature (°C) and the ordinate denotes a battery capacity (%: capacity base on 20°C). In this figure, Z4 is a case where zinc at 5 wt% and cobalt at 5 wt% are included, X4 is a comparison example including zinc alone at 5 wt%, Y4 is a comparison example including cobalt alone at 5 wt%, and U4 is a comparison example including zinc at 5 wt% and adding lithium hydroxide to the electrolyte. The type of battery is KR-AA, and measurement was carried out at a charge rate of 0.3C X5 hours and discharge of 1C. Z4 shows little fluctuation and stable capacity characteristics in a temperature range of 5 to 45°C. In the comparison example U4 the capacity at high temperature is improved but the capacity at low temperature decreases so that capacity is not stable over a wide range of temperature. In the comparison example Y4 γ-NiOOH is formed at a low temperature and swelling of the electrode is produced with an increase in the capacity, so that the capacity is not stable over a wide range of temperature.

Incidentally, since included zinc or cobalt do not themselves act as active material, an increase in their content will cause a corresponding decrease in capacity per unit weight of active material. Therefore, it is preferable to use a total zinc and cobalt content of not more than 10 wt% from the practical point of view.

As described above the swelling of electrode is prevented because zinc is included in the solid solution state, while a stable capacity over a wide range of temperature can be obtained by increasing the oxygen overvoltage in a synergistic manner, especially by improving the charge efficiency at a high temperature, when both zinc and cobalt are included in the solid solution state. Further, since cadmium which has previously been used is obviated, environmental pollution can be reduced.

### EMBODIMENTS

Zinc and barium were used as the II-group elements. Nickel hydroxide powder including zinc, barium and cobalt in solid solution state was prepared by the same manner as in the Reference Examples. Ammonium nitrate was added to an aqueous solution formed by adding specified amounts of zinc nitrate, barium nitrate and cobalt nitrate to nickel nitrate. The solution was then violently stirred while dropping in sodium hydroxide solution to decompose complex ion, and nickel hydroxide particles including zinc, barium and cobalt in solid solution state were gradually deposited and grown.

Using the nickel hydroxide powder thus prepared, paste-type nickel electrodes were made up in the same manner as described in the Reference Examples. These electrodes were charged and discharged in an electrolyte-forming potassium hydroxide solution or lithium hydroxide solution, using a cadmium anode as a counter-electrode, to measure an electrode swelling factor i.e. the formation yield of γ-NiOOH.

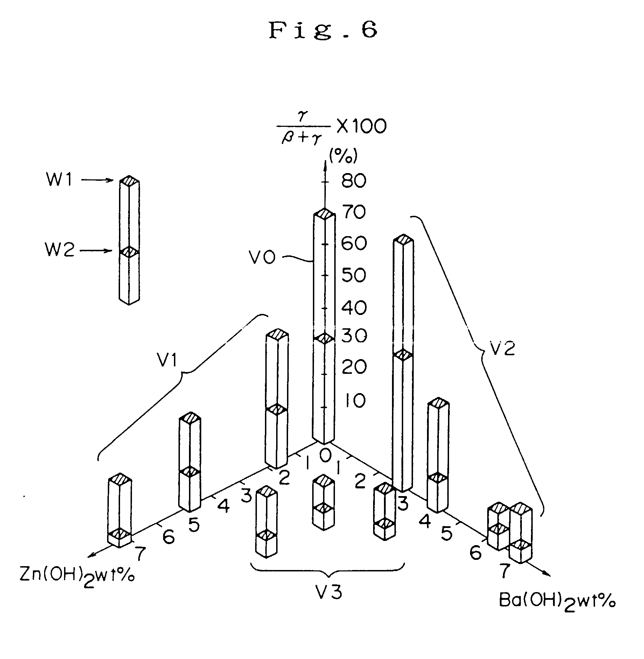

Fig. 6 is a diagram showing the relation between contents of zinc and barium (wt%) and the formation yield of γ-NiOOH(%). The abscissa denotes the formation yield of γ-NiOOH, and β and γ in the figure denote a type of NiOOH. The content of cobalt is always 5 wt%. In this figure, V0 shows one reference case where neither zinc nor barium is included i.e. only cobalt. V1 are further reference cases where only zinc is included, V2 are further reference cases where only barium is included, and V3 are cases where both zinc and barium are included, i.e. embodiments of the invention. Here, zinc and barium are stated as hydroxide. In each bar graph, W1 denotes a value at end of charge and W2 denotes a value at end of discharge, as illustrated by the sample bar at the left upper part of the figure. As seen from V3 in relation to V1 and V2, the formation yield of γ-NiOOH in the cases where both zinc and barium are included is smaller than when either of zinc or barium is included alone.

As described above, this embodiment using zinc and barium combined as the II-group element otherwise gives the same functions and effects as described in the Reference Examples.

Using the teachings herein, swelling of nickel electrodes can be prevented without cadmium pollution while charge efficiency is excellent over a wide range of temperature, so that an electrode as described herein is preferable for use as a paste-type nickel electrode with high energy density for an alkaline battery.

## Claims

1. A nickel electrode for an alkaline battery, comprising as active material a nickel hydroxide powder whose inner pore volume is not more than 0.1 ml/g and which incorporates cobalt and Group II element in solid solution state,
characterised in that barium in combination with zinc is used as said Group II element.

2. A nickel electrode according to claim 1 in which the Group II element constitutes at least 1 wt% of the powder.

3. A nickel electrode according to claim 1 or claim 2 in which the cobalt constitutes at least 2 wt% of the powder.

4. A nickel electrode according to any one of the preceding claims in which the total content of Group II element and cobalt in the powder is not more than 10 wt% thereof.

5. A nickel electrode according to any one of the preceding claims comprising a porous nickel substrate into the pores of which a paste of the nickel hydroxide powder has been filled.

6. A method of making a nickel electrode according to any one of the preceding claims in which the nickel hydroxide powder is prepared by forming an aqueous solution of predetermined quantities of nickel nitrate, zinc nitrate, barium nitrate and cobalt nitrate, adding ammonium nitrate and subjecting the solution to violent stirring while dropping in sodium hydroxide solution whereby particles of nickel hydroxide including zinc, barium and cobalt in solid solution state are deposited and grown.

## Patentansprüche

1. Nickelelektrode für eine alkalische Batterie, die als aktives Material ein Nickelhydroxidpulver umfaßt, dessen inneres Porenvolumen nicht mehr als 0,1 ml/g beträgt und das Cobalt und ein Element der Gruppe II im Zustand einer festen Lösung enthält,
dadurch gekennzeichnet, daß Barium in Kombination mit Zink als Element der Gruppe II verwendet wird.

2. Nickelelektrode gemäß Anspruch 1, bei der das Element der Gruppe II wenigstens 1 Gew.-% des Pulvers bildet.

3. Nickelelektrode gemäß Anspruch 1 oder 2, bei der das Cobalt wenigstens 2 Gew.-% des Pulvers bildet.

4. Nickelelektrode gemäß einem der vorhergehenden Ansprüche, bei der der Gesamtgehalt von Element der Gruppe II und Cobalt in dem Pulver nicht mehr als 10 Gew.-% davon beträgt.

5. Nickelelektrode gemäß einem der vorhergehenden Ansprüche, die ein poröses Nickelsubstrat umfaßt, in dessen Poren eine Paste des Nickelhydroxidpulvers gefüllt wurde.

6. Verfahren zur Herstellung einer Nickelelektrode gemäß einem der vorhergehenden Ansprüche, wobei das Nickelhydroxidpulver hergestellt wird, indem man eine wäßrige Lösung von vorbestimmten Mengen Nickelnitrat, Zinknitrat, Bariumnitrat und Cobaltnitrat bildet, Ammoniumnitrat hinzufügt und die Lösung kräftig rührt, während Natriumhydroxidlösung hinzugetropft wird, wodurch Teilchen aus Nickelhydroxid, die Zink, Barium und Cobalt im Zustand einer festen Lösung enthalten, abgeschieden werden und wachsen.

## Revendications

1. Une électrode au nickel pour un accumulateur alcalin, comprenant comme matière active une poudre d'hydroxyde de nickel dont le volume poreux interne n'est pas supérieur à 0,1 ml/g et qui contient du cobalt et un élément du Groupe II à l'état de solution solide,
caractérisée en ce que du baryum en association avec du zinc est utilisé à titre dudit élément du Groupe II.

2. Une électrode au nickel selon la revendication 1, dans laquelle l'élément du Groupe II constitue au moins 1 % en poids de la poudre.

3. Une électrode au nickel selon la revendication 1 ou la revendication 2, dans laquelle le cobalt constitue au moins 2 % en poids de la poudre.

4. Une-électrode au nickel selon l'une quelconque des revendications précédentes, dans laquelle la teneur totale en élément du Groupe II et en cobalt dans la poudre n'est pas supérieure à 10 % en poids de la poudre.

5. Une électrode au nickel selon l'une quelconque des revendications précédentes, comprenant un substrat poreux en nickel dont les pores ont été remplis d'une pâte de la poudre d'hydroxyde de nickel.

6. Un procédé de fabrication d'une électrode au nickel selon l'une quelconque des revendications précédentes, dans lequel la poudre d'hydroxyde de nickel est préparée en formant une solution aqueuse de quantités prédéterminées de nitrate de nickel, nitrate de zinc, nitrate de baryum et nitrate de cobalt, en ajoutant du nitrate d'ammonium et en soumettant la solution à une agitation énergique tout en y versant goutte à goutte une solution d'hydroxyde de sodium, de manière à déposer et faire croître des particules d'hydroxyde de nickel comprenant du zinc, du baryum et du cobalt à l'état de solution solide.
